# EUROPÄISCHE PATENTSCHRIFT

(11) **EP 3 879 158 B1**
(45) Veröffentlichungstag und Bekanntmachung des Hinweises auf die Patenterteilung: **28.02.2024**
(21) Anmeldenummer: 20162801.3
(22) Anmeldetag: 12.03.2020
(51) Int. Cl.: F16L 37/14

(54) **SCHNELLVERBINDER MIT EINEM INDIKATOR**
QUICK CONNECTOR WITH INDICATOR
CONNECTEUR RAPIDE DOTÉ D'UN INDICATEUR

(43) Veröffentlichungstag der Anmeldung: 15.09.2021
(73) Patentinhaber: TI Automotive (Fuldabrück) GmbH, 34277 Fuldabrück (DE)
(72) Erfinder: Barthel, Iris, 34270 Schauenburg (DE); Bube, Kay, 36277 Schenklengsfeld (DE); Rohde, Reiner, 34323 Maisfeld (DE); Szczepaniak, Andreas, 34253 Lohfelden (DE)
(74) Vertreter: Andrejewski - Honke Patent- und Rechtsanwälte Partnerschaft mbB

(56) Entgegenhaltungen:
- EP-A1- 1 554 516
- EP-A1- 1 770 321
- WO-A1-2017/219022
- US-A1- 2007 126 232
- US-A1- 2010 127 492
- US-A1- 2017 067 588

## Beschreibung

Die Erfindung betrifft einen Schnellverbinder, umfassend einen Kupplungskörper und ein Multifunktionsteil, wobei das Multifunktionsteil einen Rückhalter und einen Indikator aufweist, wobei der Kupplungskörper an einem Ende einen Kopfabschnitt und am anderen Ende einen Steckabschnitt umfasst, wobei der Steckabschnitt zum Auf- oder Einstecken eines ersten Rohrs ausgebildet ist, wobei das erste Rohr bevorzugt kraft- und/oder form- und/oder stoffschlüssig am Steckabschnitt gehalten wird, wobei der Kopfabschnitt eine axiale Öffnung zur Einführung eines Gegenstücks mit umlaufendem Bund aufweist, wobei der Kopfabschnitt wenigstens eine radiale Öffnung zum Einschieben des Multifunktionsteils umfasst,
wobei das Multifunktionsteil einen Rücken zur manuellen Betätigung zwecks Einschiebens in den Kupplungskörper aufweist, wobei der Rückhalter zwei Rückhalterbeine umfasst, wobei der Indikator zwei Indikatorschenkel aufweist, wobei die Indikatorschenkel bei Einführung des umlaufenden Bundes unabhängig von den Rückhalterbeinen bewegbar sind, wobei die Indikatorschenkel und der Kupplungskörper so ausgebildet sind, dass der Indikator aufgrund der durch den umlaufenden Bund verursachten Bewegung der Indikatorschenkel von einer teilweise eingeschobenen Vormontagestellung in eine vollständig eingeschobene Montagestellung überführbar ist.

Ein derartiger Schnellverbinder ist beispielsweise aus EP 2 988 048 B1 bekannt, welcher einen Kupplungskörper, einen Rückhalter sowie einen Indikator umfasst. In einem ersten Schritt wird der Rückhalter mit seinen zwei Rückhalterbeinen vollständig radial in den Kupplungskörper eingeschoben. In einem zweiten Schritt wird der Indikator nur teilweise radial in den Kupplungskörper eingeschoben, so dass er noch etwas aus dem Kupplungskörper herausragt und damit eine vormontierte Stellung einnimmt. Der Indikator kann nicht weiter eingeschoben werden, weil seine Indikatorschenkel im Inneren des Kupplungskörpers durch Anschlagelemente des Kupplungskörpers an einer weiteren Bewegung gehindert werden. Daraufhin wird einem dritten Schritt ein Gegenstück in Form eines Steckerschaftes mit umlaufendem Bund axial und vollständig in den Kupplungskörper eingeführt, um dort zwecks Fixierung in allgemein bekannter Weise mit dem Rückhalter zu verrasten. Erst jetzt kann in einem vierten und letzten Schritt auch der Indikator vollständig radial eingeschoben werden, weil die Indikatorschenkel durch den umlaufenden Bund auseinandergespreizt wurden, so dass die Indikatorschenkel an den Anschlagelementen vorbei gleiten können.

Nachteilig an derartigen Schnellverbindern ist, dass sie - bezogen auf den Kupplungskörper - mehrere bewegliche Teile aufweisen. Wird zum Beispiel eine dazugehörige Fluidleitung im Rahmen einer Reparatur bzw. Wartung untersucht, so kann es leicht passieren, dass beim Lösen der Verbindung des Schnellverbinders sowohl der Indikator als auch der Rückhalter aus dem Kupplungskörper herausgenommen werden bzw. herausfallen. Erfahrungsgemäß kommt es immer wieder vor, dass bei diesem Vorgang der Rückhalter oder der Indikator verlorengeht oder bei dem darauffolgenden Wiederherstellen der Verbindung beschädigt wird. Die Beschädigung rührt oft daher, dass es aufgrund Unkenntnis der obigen Schrittabfolge sowie aufgrund Unkenntnis der Orientierung der zu bewegenden Teile zu Versuch-und-Fehler-Montagen kommt, bei denen nicht selten zuviel Kraft aufgewendet wird und ein Teil bricht. Dies kommt besonders dann zum Tragen, wenn das Fahrzeug schon älter und der Kunststoff spröder geworden ist. Die Unkenntnis ist nicht verwunderlich, weil es mittlerweile eine große Vielzahl an Schnellverbindersystemen gibt, welche alle unterschiedlich funktionieren und jedes Jahr neue Schnellverbindersysteme auf den Markt kommen.

Aus diesem Grunde wird beispielsweise in DE 10 2016 111 471 A1 vorgeschlagen, die Indikatorfunktion in den Rückhalter zu integrieren, so dass lediglich ein einziges, per Spritzguss erzeugtes und damit integral ausgebildetes Multifunktionsteil vorliegt. Dieses Multifunktionsteil weist zwei radial einander gegenüberliegende Rückhalterbeine auf, welche am Rücken des Multifunktionsteils befestigt sind, sich in einer Einschubrichtung erstrecken und gemeinsam mit dem Rücken ein etwa U-förmiges Bauteil darstellen. Von dem Rücken aus erstrecken sich auch zwei einander radial gegenüberliegende Indikatorschenkel, welche sich ebenfalls in einer Einschubrichtung erstrecken und mit dem Rücken ebenso ein etwa U-förmiges Bauteil darstellen. Die Indikatorschenkel sind axial hinter den Rückhalterbeinen angeordnet und unabhängig von diesen auseinanderspreizbar. Ein umlaufender Bund eines männlichen Gegenstückes spreizt bei der Einführung in den Kupplungskörper demzufolge zunächst die Rückhalterbeine auseinander, welche kurz darauf wieder ihre ursprüngliche Position einnehmen und so den umlaufenden Bund im Kupplungskörper verrasten. Erst danach werden die Indikatorschenkel auseinandergespreizt und ermöglichen nun die Überführung des Multifunktionsteils von einer teilweise in eine vollständig eingeschobene Position.

Nachteilig bei dem Schnellverbinder mit Multifunktionsteil ist, dass die axiale Ausdehnung des Kopfabschnittes des Kupplungskörpers recht groß ist. Denn aufgrund der zunehmenden Enge in Motorräumen bzw. in Fahrzeugen allgemein sind insbesondere diejenigen Bauteile problematisch, die nicht nur eine größere radiale, sondern auch noch eine größere axiale Ausdehnung aufweisen. Kompaktere Schnellverbinder - insbesondere mit Kopfabschnitten geringerer axialer Ausdehnung - bieten eine größere Einsatzvielfalt und sind komfortabler hinsichtlich Aus- und Wiedereinbau bei Wartungen/Reparaturen.

Außerdem ist das Multifunktionsteil sehr komplex gestaltet, weshalb die Herstellung der Spritzgusswerkzeuge für das Multifunktionsteil sehr kostenintensiv ist.

Die US2010127492 A1 zeigt einen weiteren Schnellverbinder.

Der Erfindung liegt daher die Aufgabe zugrunde, einen kompakteren und vorzugsweise auch kostengünstigeren Schnellverbinder mit Indikatorfunktion anzugeben.

Die eingangs genannte Aufgabe der verringerten axialen Ausdehnung des Kopfabschnittes wird gelöst durch einen Schnellverbinder gemäß dem Anspruch 1.

Der Erfindung betreffend die Sicherungsarme am Multifunktionsteil liegt die Erkenntnis zugrunde, dass das Multifunktionsteil - in axialer Richtung gesehen - noch kompakter gestaltet werden kann, als dies bisher bekannt war. Denn bei einer Anordnung der Sicherungsarme vorzugsweise radial um den Rückhalter bzw. den Indikator herum entfällt die Notwendigkeit, die Sicherung des Multifunktionsteils über Elemente sicherzustellen, die sich in axialer Richtung ausdehnen. Die Sicherungsarme selbst können in radialer Richtung relativ dünnwandig ausgestaltet werden, während die Ausdehnung des Kopfabschnittes in radialer Richtung ohnehin maßgeblich von der Aufspreizung des Rückhalters bzw. des Indikators bestimmt wird. Außerdem können die Sicherungsarme die Schutzfunktion von Seitenwänden des Kopfabschnittes übernehmen, so dass entsprechend dicke Seitenwände des Kopfabschnittes nicht mehr erforderlich sind und das Vorsehen von Sicherungsarmen praktisch keine zusätzliche, radiale Ausdehnung des Kopfabschnittes bedeutet. Die Aufgabe betreffend die verringerte axiale Ausdehnung des Kopfabschnittes wird somit durch die Verwendung des erfindungsgemäßen Schnellverbinders gelöst.

Vorzugsweise umfasst der Kopfabschnitt eine Vorderwand sowie eine Rückwand. Es ist bevorzugt, dass die Rückhalterbeine und/oder die Indikatorschenkel zwischen der Vorderwand und der Rückwand angeordnet sind. Vorteilhafterweise ist die Rückwand dem Steckabschnitt zugewandt. Es ist vorteilhaft, dass die Vorderwand von der Rückwand bzw. von dem Steckabschnitt abgewandt ist. Zweckmäßigerweise umfasst der Kupplungskörper einen Dichtungsabschnitt. Der Dichtungsabschnitt ist bevorzugt zwischen dem Steckabschnitt und dem Kopfabschnitt angeordnet. Zweckmäßigerweise umfasst der Kupplungskörper einen Durchgangskanal zur fluidischen Verbindung des männlichen Gegenstücks mit dem ersten Rohr.

Vorteilhafterweise erstrecken sich die Rückhalterbeine von der Rückhalterbasis bzw. vom Rücken des Multifunktionsteils aus in der Einschubrichtung. Zweckmäßigerweise sind die Rückhalterbeine in radialer Richtung elastisch an der Rückhalterbasis bzw. an dem Rücken des Multifunktionsteils gelagert. Erfindungsgemäß sind die Rückhaltebeine so ausgebildet, dass sie auseinanderspreizbar sind bzw. auseinandergespreizt werden, wenn der Rückhalter sich innerhalb des Kupplungskörpers befindet und der umlaufende Bund des Gegenstücks in der Einführrichtung des Gegenstücks die Rückhalterbeine berührt. Der Rückhalter bzw. das Multifunktionsteil ist vorzugsweise im Wesentlichen U-förmig ausgebildet. Gemäß einer Ausführungsform ist der Rückhalter bzw. das Multifunktionsteil ringförmig ausgebildet und mag beispielsweise eine ovale Form oder eine sonstige, wie auch immer umlaufende Gestalt annehmen.

Es liegt im Rahmen der Erfindung, dass die Indikatorschenkel sich von dem Indikatorkopf bzw. vom Rücken des Multifunktionsteils aus in der Einschubrichtung erstrecken. Zweckmäßigerweise sind die Indikatorschenkel elastisch an dem Indikatorkopf bzw. an dem Rücken des Multifunktionsteils gelagert. Vorteilhafterweise sind die Indikatorschenkel so ausgebildet, dass sie bewegbar sind bzw. bewegt werden, wenn der Indikator sich innerhalb des Kupplungskörpers befindet und der umlaufende Bund des Gegenstücks in der Einführrichtung des Gegenstücks die Indikatorschenkel berührt. Der Indikator ist vorteilhafterweise im Wesentlichen U-förmig ausgebildet. Gemäß einer Ausführungsform ist der Indikator ringförmig ausgestaltet und mag beispielsweise oval sein oder eine sonst wie umlaufende Gestalt annehmen.

Es ist besonders bevorzugt, dass die Sicherungsarme unabhängig bewegbar sind von den Rückhalterbeinen und/oder den Indikatorschenkeln. Der Ausdruck "unabhängig bewegbar" meint bevorzugt, dass eine Berührung des Gegenstücks mit dem Rückhalter oder dem Indikator nicht dazu führt, dass die jeweils anderen beiden Paare so bewegt werden, dass ein anderer Zustand erreicht wird. Ein anderer Zustand ist beispielsweise erreicht, wenn die Indikatorschenkel so weit bewegt werden, dass sie in der Vormontagestellung nicht mehr an Indikatoranschlägen anschlagen. Es ist besonders bevorzugt, dass die Sicherungsarme integral mit dem Rückhalter und/oder mit dem Indikator ausgebildet sind. Gemäß einer speziellen Ausführungsform sind der Indikator und der Rückhalter integral ausgebildet bzw. bilden ein einziges, homogenes Spritzgussteil. Es ist besonders bevorzugt, dass die Rückhalterbeine und/oder die Indikatorschenkel in radialer Richtung wenigstens teilweise und vorzugsweise vollständig zwischen den Sicherungsarmen angeordnet sind. Es ist sehr bevorzugt, dass ein radialer Abstand zwischen den Sicherungsarmen ein bzw. das Aufspreizen der Rückhalterbeine und/oder der Indikatorschenkel durch den umlaufenden Bund ermöglicht. Es ist besonders bevorzugt, dass die Sicherungsarme sich in axialer Richtung wenigstens teilweise und vorzugsweise vollständig mit den Rückhalterbeinen und/oder den Indikatorschenkeln überlappen. Vorteilhafterweise umfassen die Sicherungsarme jeweils wenigstens ein Rastelement. Gemäß einer bevorzugten Ausführungsform weisen die Sicherungsarme jeweils wenigstens zwei Rastelemente auf. Es ist bevorzugt, dass das wenigstens eine Rastelement des jeweiligen Sicherungsarmes zusammen mit einem komplementären Rastelement des Kupplungskörpers bzw. des Kopfabschnittes eine Sicherung des Multifunktionsteils am Kupplungskörper in der Vormontagestellung und/oder in der Montagestellung gewährleistet. Es ist sehr bevorzugt, dass das wenigstens eine Rastelement an dem Sicherungsarm auf einer radialen Innenseite des jeweiligen Sicherungsarmes angeordnet ist. Zweckmäßigerweise ist an einer Außenseite des jeweiligen Sicherungsarmes ein Element zur Erhöhung der Griffigkeit angeordnet. Das Element zur Erhöhung der Griffigkeit mag beispielsweise eine aufgeraute Oberfläche oder ein vorspringendes Element oder mehrere vorspringende Elemente sein.

Es ist sehr vorteilhaft, dass der Rückhalter eine Rückhalterbasis aufweist und/oder der Indikator einen Indikatorkopf umfasst. Es ist sehr bevorzugt, dass die Rückhalterbeine und die Rückhalterbasis integral ausgebildet sind. Vorzugsweise sind der Rücken des Multifunktionsteils und die Rückhalterbasis integral ausgebildet bzw. miteinander identisch. Vorteilhafterweise ist der Indikatorkopf integral mit den Indikatorschenkeln ausgebildet. Gemäß einer Ausführungsform ist der Indikatorkopf integral mit dem Rücken des Multifunktionsteils ausgebildet bzw. identisch mit diesem. Gemäß einer speziellen Ausführungsform ist der Indikatorkopf integral mit der Rückhalterbasis ausgebildet bzw. identisch mit dieser.

Es liegt im Rahmen der Erfindung, dass der Indikator an dem Rückhalter kraft- und/oder form- und/oder stoffschlüssig befestigt und vorzugsweise festgeklemmt ist. Vorzugsweise ist der Indikator mittels Kraftschluss und weiter vorzugsweise mittels Formschluss an dem Rückhalter befestigt. Es ist bevorzugt, dass der Indikator mittels Bewegung in axialer Richtung einen Kraftschluss mit dem Rückhalter eingeht. Es ist möglich, dass der Indikator und der Rückhalter mittels Stoffschluss aneinander befestigt sind. Der Begriff "Stoffschluss" meint vorzugsweise ein Verkleben und/oder ein Verschweißen. Demgegenüber meint der Begriff "Stoffschluss" bevorzugt nicht, dass der Rückhalter und der Indikator integral miteinander verbunden sind, wie sich dies beispielsweise bei einem gemeinsamen Spritzguss ergibt. Vorzugsweise umschließt der Rückhalter den Indikator wenigstens teilweise in Umfangsrichtung. Vorzugsweise überlappt sich die Rückhalterbasis in axialer Richtung wenigstens teilweise und vorzugsweise vollständig mit dem Indikatorkopf. Es ist bevorzugt, dass die Rückhalterbasis in der Montagestellung und in einer Draufsicht den Indikatorkopf wenigstens teilweise und vorzugsweise vollständig überdeckt.

Gemäß einer bevorzugten Ausführungsform sind der Rückhalter und der Indikator miteinander verrastet bzw. miteinander verrastbar. Es ist vorteilhaft, dass ein Lösen des Indikators vom Rückhalter in rein axialer Richtung unterbunden wird, was vorzugsweise durch eine Rastverbindung an dem Rückhalter und/oder an dem Indikator und/oder durch eine stoffschlüssige Verbindung zwischen dem Rückhalter und dem Indikator ermöglicht wird. Die Rastverbindung mag beispielsweise im Bereich der Rückhalterbasis bzw. im Bereich des Indikatorkopfes bzw. in deren Mittelabschnitten angeordnet sein. Es ist möglich, dass zwei Rastverbindungen vorliegen, welche beispielsweise in äußeren Bereichen der Rückhalterbasis bzw. des Indikatorkopfes befindlich sein können. Die stoffschlüssige Verbindung zwischen dem Rückhalter und dem Indikator ist zweckmäßigerweise im Bereich der Rückhalterbasis bzw. des Indikatorkopfes bzw. im Bereich von deren Mittelabschnitten befindlich. Es ist möglich, dass die stoffschlüssige Verbindung in zwei äußeren Bereichen der Rückhalterbasis bzw. des Indikatorkopfes befindlich ist und beispielsweise zwei Verbindungsstellen umfasst. Die stoffschlüssige Verbindung kann beispielsweise durch ein Verschweißen oder ein Verkleben hergestellt sein. Der Ausdruck "unterbinden eines Lösens des Indikators vom Rückhalter in rein axialer Richtung" meint vorzugsweise, dass ein Lösen von Indikator und Rückhalter nur unter Inkaufnahme von Zerstörung bzw. Beschädigung von wenigstens einem dieser beiden Teile möglich ist.

Es ist möglich, dass der Rückhalter ein Kunststoffmaterial A und/oder der Indikator ein Kunststoffmaterial B umfasst, wobei sich vorzugsweise das Kunststoffmaterial A vom Kunststoffmaterial B unterscheidet. Der Begriff "Kunststoffmaterial" kann ein einzelnes, reines Polymer oder aber ein Blend aus mehreren Polymeren sein. Der Begriff "Kunststoffmaterial" kann insbesondere auch Additive (beispielsweise für Farben, Weichmacher, Flammschutz, tribologische Eigenschaften) enthalten, welche keine Polymere sind. Das Wort "unterscheiden" meint insbesondere auch geringfügige Unterschiede, so dass sich das Kunststoffmaterial A von dem Kunststoffmaterial B schon dann unterscheidet, wenn diese sich nur bezüglich des Anteils eines einzigen Additivs oder der jeweiligen Molmasse des Polymers unterscheiden. Ganz besonders bevorzugt liegt schon dann ein Unterschied vor, wenn der Indikator und der Rückhalter - wie auch immer - messbar aus unterschiedlichen Chargen stammen. Insbesondere liegt ein Unterschied lediglich dann nicht vor, wenn der Rückhalter und der Indikator ein integrales Spritzgussteil darstellen. Der Ausdruck "integrales Spritzgussteil" meint vorzugsweise solche Multifunktionsteile, bei denen nach dem Auskühlen des Spritzgusses gleichzeitig ein Rückhalter und ein Indikator vorliegen und wobei diese zugleich miteinander verbunden sind. Gemäß einer Ausführungsform umfasst der Rückhalter und/oder der Indikator ein Metall.

Gemäß einer sehr bevorzugten Ausführungsform weist der Rückhalter wenigstens einen Vorsprung und vorzugsweise wenigstens zwei Vorsprünge auf, welcher bzw. welche radial nach innen vorspringt bzw. vorspringen, so dass vorzugsweise ein Lösen des Indikators vom Rückhalter in rein radialer Richtung und vorzugsweise in allen radialen Richtungen unterbunden wird. Vorteilhafterweise gehen der Rückhalter und der Indikator aufgrund des Vorsprungs einen Formschluss in wenigstens einer radialen Richtung, vorzugsweise in mehreren radialen Richtungen und besonders vorzugsweise in allen radialen Richtungen ein. Vorteilhafterweise ist der wenigstens eine Vorsprung in einem Übergangsbereich zwischen der Rückhalterbasis und einem der beiden Rückhalterbeine angeordnet. Vorzugsweise sind beide Vorsprünge jeweils in einem Übergangsbereich zwischen der Rückhalterbasis und dem jeweiligen Rückhalterbein angeordnet. Es ist sehr bevorzugt, dass der Vorsprung bzw. die Vorsprünge des Rückhalters hakenförmig ausgebildet ist bzw. sind.

Es ist besonders bevorzugt, dass der Indikator wenigstens eine Nase umfasst bzw. wenigstens zwei Nasen aufweist, welche nach radial außen hervorragt bzw. ragen, so dass vorzugsweise ein Lösen des Indikators vom Rückhalter in rein radialer Richtung unterbunden wird. Besonders vorzugsweise steht der Indikatorkopf in radialer Richtung über die Indikatorschenkel hervor, so dass die wenigstens eine Nase gebildet wird bzw. die wenigstens zwei Nasen gebildet werden. Die wenigstens eine Nase bzw. die wenigstens zwei Nasen ist/sind (jeweils) in einem Übergangsbereich zwischen dem Indikatorkopf und (jeweils) einem der Indikatorschenkel angeordnet. Es ist besonders bevorzugt, dass die wenigstens eine Nase bzw. die wenigstens zwei Nasen in Eingriff mit dem (jeweiligen) Vorsprung des Rückhalters steht bzw. stehen. Es ist sehr bevorzugt, dass die Nase bzw. die Nasen hakenförmig ausgebildet ist/sind.

Gemäß einer sehr bevorzugten Ausführungsform sind die Indikatorschenkel in der Einführrichtung des Gegenstücks hinter den Rückhalterbeinen angeordnet. Vorzugsweise befinden sich die Rückhalterbeine zwischen der Vorderwand des Kopfabschnittes und den Indikatorschenkeln. Zweckmäßigerweise liegen die Indikatorschenkel zwischen den Rückhalterbeinen und der Rückwand des Kopfabschnittes. Gemäß einer sehr bevorzugten Ausführungsform beträgt die Ausdehnung eines Spaltes zwischen den Rückhalterbeinen und den Indikatorschenkeln in axialer Richtung weniger als 2 mm, vorzugsweise weniger als 1 mm, weiter vorzugsweise weniger als 0,5 mm und besonders vorzugsweise weniger als 0,2 mm. Gemäß einer sehr bevorzugten Ausführungsform liegen die Indikatorschenkel an den Rückhalterbeinen an. Vorteilhafterweise überragt die Rückhalterbasis die Rückhalterbeine und/oder die Indikatorschenkel und/oder die Indikatorbasis in wenigstens einer und vorzugsweise in den beiden axialen Richtungen.

Es liegt im Rahmen der Erfindung, dass die Indikatorschenkel bei Einführung des umlaufenden Bundes - vorzugsweise lediglich - radial auseinanderspreizbar sind bzw. auseinandergespreizt werden. Vorzugsweise umfassen die Indikatorschenkel jeweils einen Kontaktbereich zur Kontaktierung des umlaufenden Bundes. Zweckmäßigerweise ist wenigstens ein Teilbereich des jeweiligen Kontaktbereiches der Indikatorschenkel nach radial innen zum Zwecke der Einführung des männlichen Bundes abgeschrägt. Es ist besonders bevorzugt, dass die Kontaktbereiche der Indikatorschenkel jeweils wenigstens einen Indikatorschenkelvorsprung aufweisen, welche nach radial innen vorspringen. Vorteilhafterweise sind die Indikatorschenkelvorsprünge so ausgebildet, dass sie den umlaufenden Bund bei Einführung des Gegenstücks berühren, so dass die Indikatorschenkel auseinandergespreizt werden. Es ist sehr bevorzugt, dass die Indikatorschenkelvorsprünge so ausgebildet sind, dass die bei der Überführung von der Vormontagestellung in die Montagestellung des Multifunktionsteils den umlaufenden Bund passieren, so dass sich die Indikatorschenkel wieder entspannen.

Es ist sehr bevorzugt, dass der Kupplungskörper zwei Indikatoranschläge aufweist, wobei jeder der beiden Indikatoranschläge einem der beiden Indikatorschenkel zugeordnet ist. Vorzugsweise definieren die Indikatoranschläge die Vormontagestellung. Zweckmäßigerweise sind die Indikatoranschläge bzw. die Indikatorschenkel so ausgebildet, dass bei einem Einschieben des Multifunktionsteils in den Kupplungskörper Indikatorschenkelenden an den Indikatoranschlägen anschlagen. Es ist besonders vorteilhaft, dass die Indikatorschenkel bzw. die Indikatorschenkelenden bzw. die Indikatoranschläge so ausgestaltet sind, dass bei einer Einführung des Gegenstücks der umlaufende Bund die Indikatorschenkel berührt, so dass die Indikatorschenkel auseinandergespreizt werden und die Indikatorschenkelenden mittels manuellem Druck die Indikatoranschläge passieren können. Vorzugsweise sind die Indikatoranschläge bzw. das Multifunktionsteil so ausgebildet, dass der Rückhalter bzw. die Rückhalterbeine während des vollständigen Einschubweges des Multifunktionsteils bzw. während des vollständigen Einführweges des Gegenstücks nicht an den Indikatoranschlägen anschlagen.

Es liegt im Rahmen der Erfindung, dass das Multifunktionsteil wenigstens einen Halteriegel aufweist. Es ist bevorzugt, dass der Halteriegel integral mit dem Rückhalter und/oder dem Indikator ausgebildet ist. Vorzugsweise erstreckt sich der Halteriegel von der Rückhalterbasis bzw. von dem Indikatorkopf bzw. von dem Rücken des Multifunktionsteils in radialer Richtung bzw. in Richtung zum Gegenstück hin bzw. in Richtung zum Durchgangskanal hin. Vorzugsweise befindet sich der Halteriegel in radialer Richtung zwischen der Rückhalterbasis bzw. dem Indikatorkopf bzw. dem Rücken des Multifunktionsteils und einer Außenfläche des Gegenstücks bzw. des Steckerschafts. Es ist besonders bevorzugt, dass der Halteriegel so ausgebildet ist, dass er in radialer Richtung in der Montagestellung mit dem umlaufenden Bund des Gegenstücks überlappt. Zweckmäßigerweise ist der Halteriegel so ausgebildet, dass er in radialer Richtung in der Vormontagestellung mit dem umlaufenden Bund des Gegenstücks nicht überlappt. Es ist besonders bevorzugt, dass der Halteriegel in der Montagestellung axial zwischen der Vorderwand des Kopfabschnittes und den Indikatorschenkeln angeordnet ist. Zweckmäßigerweise befindet sich die Rückseite des Halteriegels in einer Ebene zusammen mit den Rückseiten der Rückhalterbeine zwecks Sicherung des Gegenstücks in dem Kupplungskörper. Es ist vorteilhaft, dass der Halteriegel und die Rückhalterbeine so ausgebildet sind, dass der umlaufende Bund bei Zugbelastung zwischen Gegenstücken und Schnellverbinder an der Rückseite des Halteriegels und an der Rückseite der Rückhalterbeine anliegt. Es ist möglich, dass der Halteriegel wenigstens eine und vorzugsweise wenigstens zwei sich von der Rückhalterbasis bzw. von dem Indikatorkopf bzw. von dem Rücken des Multifunktionsteils erstreckende Strebe bzw. erstreckenden Streben aufweist. Es ist möglich, dass der Kupplungskörper bzw. der Kopfabschnitt Nuten aufweist, welche dem Halteriegel bzw. der Strebe bzw. den Streben zugeordnet ist/sind.

Es ist sehr bevorzugt, dass der Kopfabschnitt bzw. die Vorderwand bzw. die Rückwand des Kupplungskörpers eine Aussparung aufweist, so dass das Multifunktionsteil bzw. der Rücken des Multifunktionsteils bzw. der Rückhalter bzw. die Rückhalterbasis bzw. der Indikator bzw. der Indikatorkopf bündig in den Kopfabschnitt einschiebbar ist. Vorzugsweise fluchtet eine Außenfläche des Multifunktionsteils in der Montagestellung mit dem Kopfabschnitt bzw. mit der Vorderwand bzw. mit der Rückwand in Umfangsrichtung bzw. in axialer Richtung. Vorzugsweise überragt in radialer Richtung eine Unterseite des Kopfabschnittes die Indikatorschenkel und/oder die Rückhalterbeine bzw. fluchtet die Unterseite mit den Indikatorschenkeln und/oder Rückhalterbeinen, wenn sich das Multifunktionsteil in der Montagestellung befindet.

Es liegt im Rahmen der Erfindung, dass die Rückhalterbeine jeweils eine sich in axialer Richtung erstreckende Ausbuchtung aufweisen, wobei die jeweilige Ausbuchtung vorzugsweise auf einer dem Indikator abgewandten Seite bzw. auf einer der Vorderwand des Kupplungskörpers zugewandten Seite der Rückhalterbeine befindlich ist. Vorzugsweise umfasst eine den Rückhalterbeinen zugewandte Innenfläche der Vorderwand zwei in axialer Richtung ausgebildete Einbuchtungen. Zweckmäßigerweise sind die Einbuchtungen so ausgebildet, dass diese die jeweilige Ausbuchtung aufnehmen können. Vorteilhafterweise sind die Einbuchtungen Durchbrüche der Vorderwand. Zweckmäßigerweise befinden sich die Einbuchtungen auf einer solchen radialen Höhe, welche der radialen Höhe der Ausbuchtungen der Rückhalterbeine in der Vormontagestellung entspricht. Es ist von besonderem Vorteil, wenn die Ausbuchtungen und die Einbuchtungen so ausgebildet sind, dass sie insbesondere dann ineinandergreifen, wenn die Schnellverbindung umfassend den Schnellverbinder und das Gegenstück unter Zug gesetzt wird, während sich das Multifunktionsteil in der Vormontagestellung befindet. Vorzugsweise umfasst die Innenseite der Vorderwand zwei Ausnehmungen, welche die Ausbuchtungen der Rückhalterbeine in der Montagestellung aufnehmen können. Die Ausnehmungen dienen dazu, dass im Falle einer Zugbelastung der Schnellverbindung die Vorderseiten der Rückhalterbeine flächig an der Innenseite der Vorderwand anliegen können.

Es ist bevorzugt, dass der Kupplungskörper zwei Rückhalteranschläge aufweist, wobei die Rückhalteranschläge so ausgebildet sind, dass ein Aufspreizen der Rückhalterbeine unterbunden wird, wenn sich der Rückhalter bzw. das Multifunktionsteil in der Montagestellung befindet. Es ist bevorzugt, dass sich die Enden der Rückhalterbeine in der Montagestellung zwischen den beiden Rückhalteranschlägen befinden. Vorzugsweise ist jedem der beiden Rückhalterbeine ein Rückhalteranschlag zugeordnet, wobei der jeweilige Rückhalteranschlag die Bewegung des jeweiligen Rückhalterbeines nach radial außen unterbindet.

Gemäß einer Ausführungsform weist der Kupplungskörper ein Kopfteil und ein Dichtungsteil auf, wobei das Kopfteil und das Dichtungsteil zueinander separat ausgebildet sind. Es ist sehr bevorzugt, dass das Kopfteil und das Dichtungsteil miteinander verrastbar bzw. verrastet sind. Zweckmäßigerweise ist der Kopfabschnitt des Kupplungskörpers Bestandteil des Kopfteiles. Vorzugsweise umfasst das Kopfteil einen Rastabschnitt. Der Rastabschnitt des Kopfteiles weist vorzugsweise wenigstens zwei/drei/vier Rastelemente auf. Die Rastelemente des Kopfteiles mögen federnd gelagerte Rastnasen sein, welche nach radial außen zeigen. Es ist bevorzugt, dass das Dichtungsteil eine Dichtung in radialer Richtung umschließt. Die Dichtung umfasst vorzugsweise wenigstens einen elastisch ausgebildeten Dichtungsring und vorzugsweise zwei elastisch ausgebildete Dichtungsringe mit einem Abstandshalter dazwischen. Es ist sehr bevorzugt, dass das Kopfteil die Dichtung in axialer Richtung begrenzt, so dass die Dichtung durch das Kopfteil unverlierbar in dem Dichtungsteil gehalten wird. Vorzugsweise umfasst das Dichtungsteil einen Rastabschnitt zur Verrastung mit dem Kopfteil. Es ist zweckmäßig, dass der Steckabschnitt Bestandteil des Dichtungsteiles ist. Zweckmäßigerweise ist der Dichtungsabschnitt zwischen dem Steckabschnitt und dem Rastabschnitt des Dichtungsteiles angeordnet. Der Rastabschnitt des Dichtungsteils weist bevorzugt Rastelemente auf, welche komplementär zu den Rastelementen des Kopfteiles ausgebildet sind. Die Rastelemente des Dichtungsteiles mögen fensterartig ausgebildet sein, in welche die federnd gelagerten Rastnasen des Kopfteiles eingreifen können.

Die eingangs genannte Aufgabe wird bzw. diese eingangs genannten Aufgaben werden gelöst durch eine Schnellverbindung umfassend einen erfindungsgemäßen Schnellverbinder sowie ein männliches Gegenstück mit einem umlaufenden Bund. Das Gegenstück weist zweckmäßigerweise einen Steckerschaft auf, wobei der Steckerschaft sich von dem umlaufenden Bund bis zum Ende des Gegenstücks erstreckt. Am Ende des Gegenstücks weist das Gegenstück vorzugsweise eine abgerundete, sich zu einer Stirnfläche hin verjüngende Außenfläche auf. Bezüglich des umlaufenden Bundes liegt dem Steckerschaft vorzugsweise ein Anschlussabschnitt des Gegenstücks gegenüber. Der Anschlussabschnitt mag beispielsweise zum Anschluss an ein zweites Rohr und/oder an ein Aggregat (Pumpe, Tank, etc.) ausgebildet sein. Der Anschluss mag zum Auf- oder Einstecken des zweiten Rohres bzw. Aggregates ausgebildet sein. Es ist möglich, dass der Anschlussabschnitt des Gegenstücks einsstückig bzw. integral mit dem Aggregat verbunden ist.

Die eingangs genannte Aufgabe wird bzw. die eingangs genannten Aufgaben werden gelöst durch eine Fluidleitung umfassend einen erfindungsgemäßen Schnellverbinder oder eine erfindungsgemäße Schnellverbindung, wobei der Steckabschnitt des Schnellverbinders mit einem ersten Rohr verbunden ist. Vorzugsweise ist das Gegenstück mit einem zweiten Rohr oder einem Aggregat verbunden.

Nachfolgend wird die Erfindung anhand einer ein Ausführungsbeispiel darstellenden Zeichnung näher erläutert. Es zeigen in schematischer Darstellung:
- Fig. 1: eine erfindungsgemäße Schnellverbindung umfassend einen Schnellverbinder und ein entsprechendes Gegenstück in einer ersten Perspektive,
- Fig. 2: den Schnellverbinder aus Figur 1 in einer zweiten Perspektive,
- Fig. 3: den Schnellverbinder aus Figur 2 ohne Dichtungsteil,
- Fig. 4: das erfindungsgemäße Multifunktionsteil aus den Figuren 1 bis 3,
- Fig. 5: die Schnellverbindung aus Figur 1 in einem Längsschnitt,
- Fig. 6,7,8: eine Abfolge der Bewegungen des Multifunktionsteils aus Fig. 4,
- Fig. 9: einen Querschnitt durch die Vorderwand des erfindungsgemäßen Schnellverbinders und
- Fig. 10: eine Seitenansicht des Multifunktionsteils.

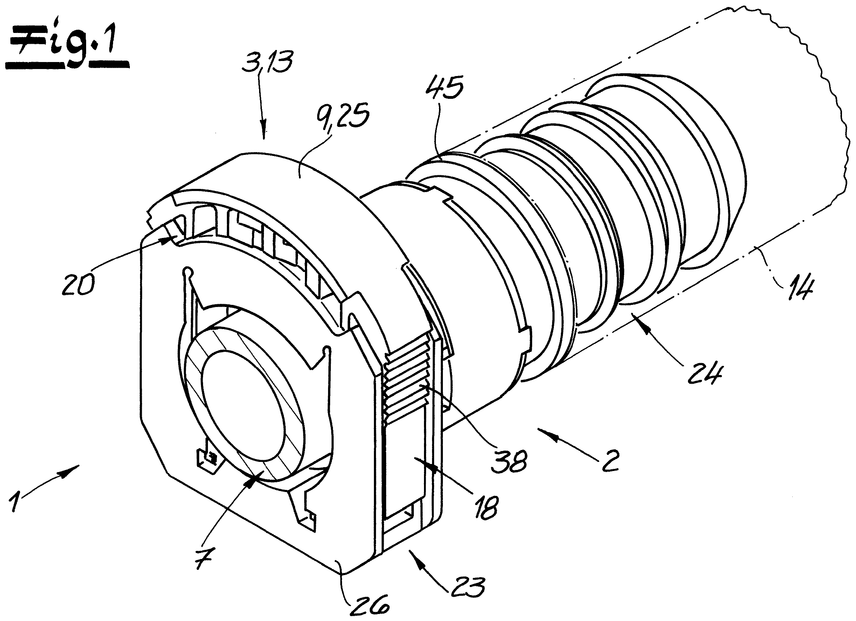

In Fig. 1 ist eine erfindungsgemäße Schnellverbindung umfassend einen Schnellverbinder 1 sowie ein dazu komplementäres, männliches Gegenstück 7 abgebildet. Das Gegenstück 7 ist rohrförmig und in den Schnellverbinder 1 eingeführt. Der Schnellverbinder 1 umfasst ferner ein Multifunktionsteil 13 sowie einen Kupplungskörper 2, wobei das Multifunktionsteil 13 in radialer Richtung und in Fig. 1 von oben kommend teilweise in den Kupplungskörper 2 eingeschoben wurde und dort eine Vormontagestellung eingenommen hat. In einem hinteren Bereich des Schnellverbinders 1 bzw. Kupplungskörpers 2 ist ein erstes Rohr 14 auf den Schnellverbinder 1 bzw. Kupplungskörper 2 aufgesteckt. Das Gegenstück 7 kann seinerseits - je nach Ausbildung - mit einem hier nicht dargestellten zweiten Rohr mittels Auf- oder Einstecken verbunden werden. Ebenso kann das Gegenstück 7 an einem Aggregat (beispielsweise einen Tank oder eine Pumpe) angeschlossen sein oder aber einstückig bzw. integral mit dem Aggregat verbunden sein. Der Einfachheit halber ist weder in Fig. 1 noch in den nachfolgenden Figuren der allgemein bekannte Anschluss des Gegenstücks 7 an ein zweites Rohr oder an ein Aggregat dargestellt.

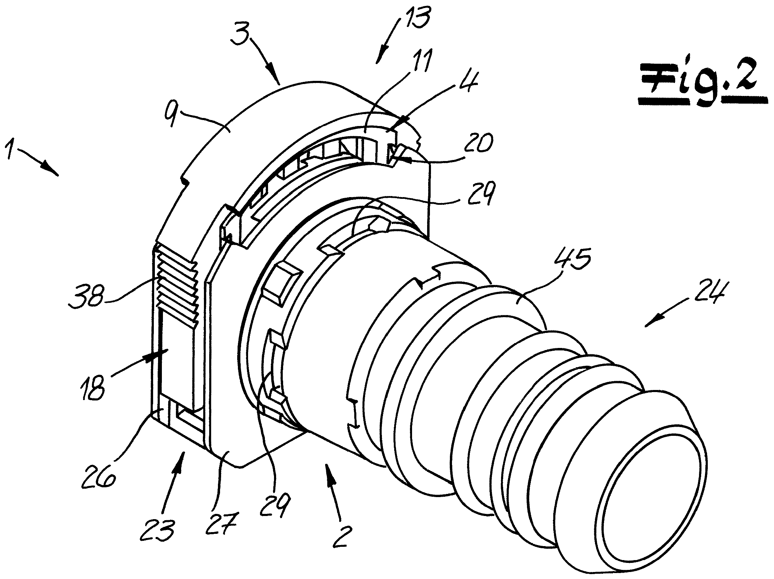

In Fig. 2 ist der Schnellverbinder aus einer rückwärtigen Perspektive dargestellt, wobei das erste Rohr 14 zwecks besserer Übersicht weggelassen wurde. Aus dieser Perspektive ist erkennbar, dass der Kupplungskörper 2 aus einem das Multifunktionsteil 13 aufnehmenden Kopfteil 23 sowie aus einem Dichtungsteil 24 zusammengesetzt ist. Das Kopfteil 23 und das Dichtungsteil 24 sind über eine Rastverbindung miteinander verbunden, wobei in Fig. 2 Rastelemente 29 des Dichtungsteils 24 in Form von Fenstern erkennbar sind. Aufgrund des Perspektivwechsels ist nun auch ersichtlich, dass das Multifunktionsteil 13 nicht nur den Rückhalter 3, sondern auch noch einen Indikator 4 umfasst. Das Multifunktionsteil 13 ist in der Vormontagestellung größtenteils zwischen einer Vorderwand 26 und einer Rückwand 27 des Kopfteiles 23 angeordnet, was lediglich für einen Rücken 25 des Multifunktionsteils 13 nicht zutrifft. Der Rücken 25 besitzt eine axiale Ausdehnung, welche auch die Vorderwand 26 und die Rückwand 27 überdeckt.

Anhand der Fig. 1 und 2 ist erkennbar, dass sowohl die Vorderwand 26 als auch die Rückwand 27 eine Aussparung 20 aufweisen, wobei diese Aussparung 20 etwa komplementär zu dem Rücken 25 ausgebildet ist. Auf diese Weise kann das Multifunktionsteil 13 aus der Vormontagestellung der Fig. 1 und 2 mittels manuellem Druck von oben noch weiter in das Kopfteil 23 eingeschoben werden, bis das Multifunktionsteil 13 die Montagestellung (nicht in Fig. 2 abgebildet) erreicht. In der Montagestellung ist dann der Rücken 25 sowohl in axialer als auch in radialer Richtung bündig in dem Kopfteil 23 versenkt. Diese bündige Versenkung des Rückens 25 in dem Kopfteil 23 signalisiert leicht erkennbar, dass das Multifunktionsteil 13 die Montagestellung eingenommen hat. Demzufolge äußert sich die Indikatorfunktion des erfindungsgemäßen Schnellverbinders insbesondere in Form der bündigen Versenkung des Multifunktionsteils 13 in dem Kopfteil 23.

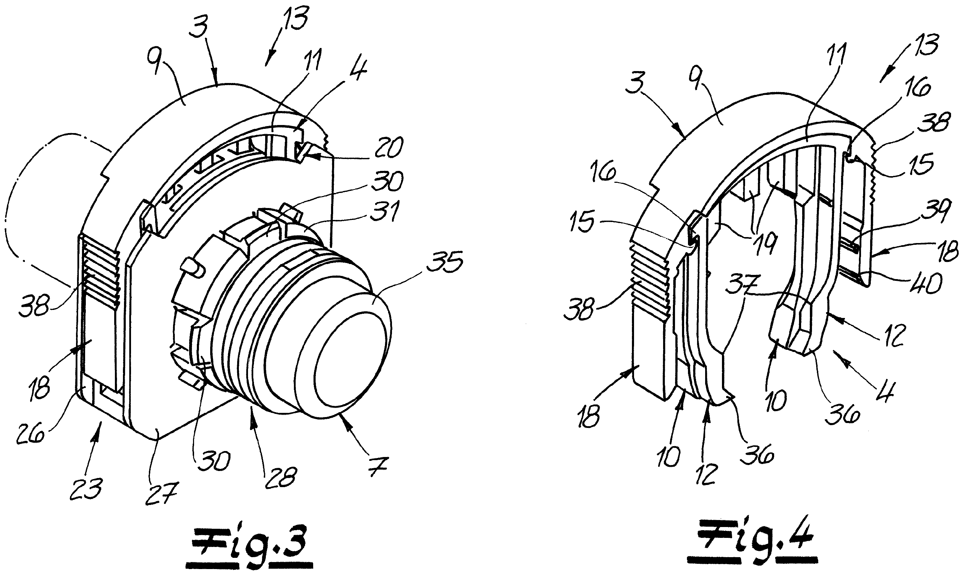

In Fig. 3 wurde das Dichtungsteil 24 aus Fig. 2 weggelassen, so dass eine Dichtung 28 zum Vorschein kommt. Die Dichtung 28 umfasst zwei elastisch ausgebildete Dichtungsringe sowie einen dazwischen angeordneten Abstandshalter. Darüber hinaus offenbart diese Figur Rastelemente 30 des Kopfteiles 23 in Form von federnd gelagerten Rastnasen, welche in die Rastelemente 29 des Dichtungsteils 24 eingreifen. Zwischen den Rastelementen 30 des Kopfteils 23 sind in Umfangsrichtung und in abwechselnder Reihenfolge starre Elemente 31 angeordnet.

In Fig. 4 schließlich wurden mit Blick auf Fig. 3 noch das Gegenstück 7, die Dichtung 28 und das Kopfteil 23 weggelassen, so dass lediglich noch das Multifunktionsteil 13 zu sehen ist. Demzufolge ist der Indikator 4 im Wesentlichen U-förmig ausgebildet und umfasst einen Indikatorkopf 11 und zwei Indikatorschenkel 12, welche sich von dem Indikatorkopf 11 aus in Einschubrichtung erstrecken. Jeder der beiden Indikatorschenkel 12 weist ein Indikatorschenkelende 36 sowie einen Indikatorschenkelvorsprung 37 auf. Während eine der Rückwand 27 zugewandte Rückseite der Indikatorschenkel 12 eben ausgeführt ist, trifft dies nicht in Gänze auf die Vorderseite der Indikatorschenkel 12 zu. Denn insbesondere im Bereich der Indikatorschenkelvorsprünge 37 sind die Vorderseiten der Indikatorschenkel 12 nach innen hin und in Einführrichtung des Gegenstücks 7 etwas abgeschrägt.

Gemäß dem Ausführungsbeispiel nach Fig. 4 ist der Rückhalter 3 in etwa U-förmig ausgestaltet und weist eine Rückhalterbasis 9 sowie zwei Rückhalterbeine 10 auf. Vorzugsweise ist die Rückhalterbasis 9 integral mit den Rückhalterbeinen 10 ausgebildet. Die beiden Rückhalterbeine 10 erstrecken sich zweckmäßigerweise in Einschubrichtung von der Rückhalterbasis 9. Wie auch die Indikatorschenkel 12 sind die Rückhalterbeine 10 elastisch gelagert und können durch den umlaufenden Bund 8 des Gegenstücks 7 auseinandergespreizt werden. Auch die Vorderseite der Rückhalterbeine 10 ist nach innen hin und in Einführrichtung des Gegenstücks 7 zwecks erleichterter Einführung des Gegenstücks 7 abgeschrägt.

Darüber hinaus umfasst das Multifunktionsteil 13 insbesondere gemäß Fig. 4 zwei Sicherungsarme 18, welche in radialer Richtung die Rückhalterbeine 10 sowie die Indikatorschenkel 12 umfassen. Die Sicherungsarme 18 weisen ein oberes Rastelement 39 sowie ein unteres Rastelement 40 auf der jeweiligen Innenseite auf. Darüber hinaus besitzen beide Sicherungsarme 18 auf der Außenseite in einem oberen Bereich ein Griffelement 38, welches beispielsweise eine Riffelung aufweisen mag. Das Multifunktionsteil 13 weist schließlich einen Halteriegel 19 auf, welcher in diesem Ausführungsbeispiel aus drei sich in Einschubrichtung erstreckenden Streben besteht.

Die Sicherungsarme 18 sowie der Halteriegel 19 sind ausweislich von Fig. 4 vorzugsweise integral mit dem Rückhalter 3, 9, 10 ausgebildet. Demgegenüber ist der Indikator 4 in diesem Ausführungsbeispiel als separates Teil ausgestaltet und in einem separaten Spritzguss hergestellt worden. In diesem Ausführungsbeispiel ist der Indikator 4 an dem Rückhalter 3 befestigt, indem der Indikator 4 an den Rückhalter 3 festgeklemmt ist und auf diese Weise das Multifunktionsteil 13 bildet. Hierzu besitzt der Rückhalter 3 einen Vorsprung 15, welcher nach radial innen ragt. In ähnlicher Weise umfasst der Indikator 4 eine Nase 16, welche nach radial außen gerichtet ist und in Eingriff mit dem Vorsprung 15 des Rückhalters 3 steht. Hierdurch kann der Indikator 4 dieses Ausführungsbeispiels in keiner radialen Richtung mehr von dem Rückhalter 3 gelöst werden. Ein Lösen und ein erneutes Befestigen des Indikators 4 an dem Rückhalter 3 ist nur möglich, indem der Indikator 4 in axialer Richtung bewegt wird. Dabei sind der Vorsprung 15 des Rückhalters 3 sowie die Nase 16 des Indikators 4 so ausgestaltet, dass bei einem Aufschieben des Indikators 4 auf den Rückhalter 3 zugleich auch ein Kraftschluss entsteht, wodurch der Indikator 4 an dem Rückhalter 3 dauerhaft sicher befestigt ist.

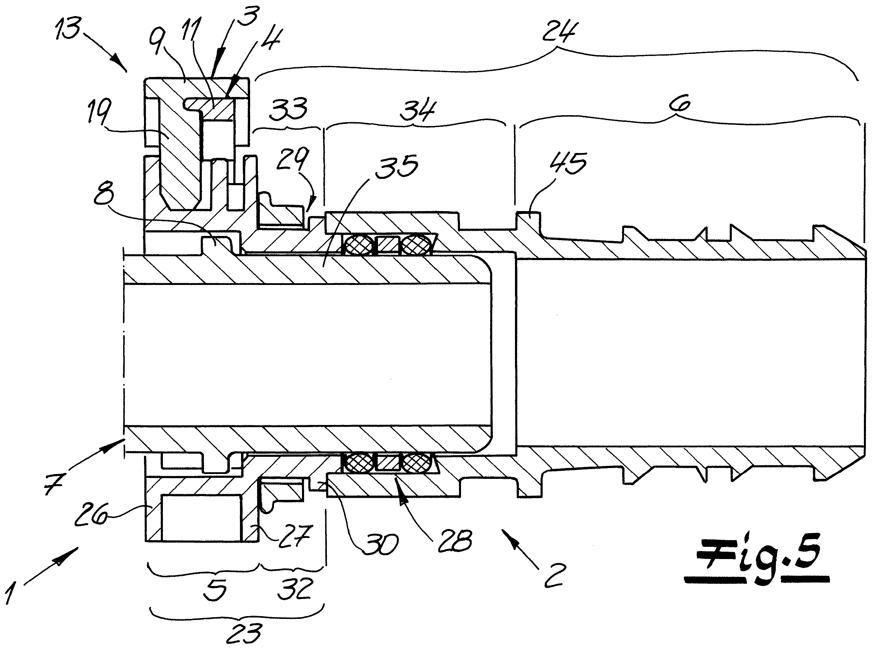

In Fig. 5 ist ein Längsschnitt der Schnellverbindung aus den Fig. 1 und 2 abgebildet. Demzufolge weist das Gegenstück 7 einen umlaufenden Bund 8 sowie einen Steckerschaft 35 auf. Der Schnellverbinder 1 besitzt einen Durchgangskanal, welcher sich in axialer Richtung entlang des Kopfteils 23 und des Dichtungsteils 24 erstreckt. Der Durchgangskanal des Kupplungskörpers 2 wird gegenüber einer Außenfläche des Gegenstücks 7 mit Hilfe der Dichtung 28 abgedichtet, so dass eine sichere, fluiddichte Verbindung zwischen dem ersten Rohr 14 und dem zweiten Rohr bzw. dem Aggregat hergestellt wird.

In Fig. 5 ist außerdem gezeigt, dass sich das Kopfteil 23 in einen Kopfabschnitt 5 sowie in einen Rastabschnitt 32 unterteilt. Der Kopfabschnitt 5 wird in axialer Richtung von der Vorderwand 26 und der Rückwand 27 begrenzt und nimmt das Multifunktionsteil 13 bzw. die Rückhalterbeine 10, die Indikatorschenkel 12, die Sicherungsarme 18 und den Halteriegel 19 auf. Der Rastabschnitt 32 umfasst im Wesentlichen die Rastelemente 30 in Form von federnd gelagerten Rastnasen sowie die starren Elemente 31. Das Dichtungsteil 24 umfasst seinerseits einen Rastabschnitt 33, einen Dichtungsabschnitt 34 sowie einen Steckabschnitt 6. Der Rastabschnitt 33 umfasst insbesondere die Rastelemente 29 in Form der Fenster, während der Dichtungsabschnitt 34 vor allem die Dichtung 28 radial umschließt. Der Steckabschnitt 6 dieses Ausführungsbeispiels mag einen oder mehrere Aufsteckdorne sowie einen Flansch als Rohranschlag 45 für das erste Rohr 14 aufweisen. In diesem Ausführungsbeispiel umfasst der Steckabschnitt 6 außerdem noch eine Nut für die Aufnahme eines hier nicht dargestellten Dichtungsrings.

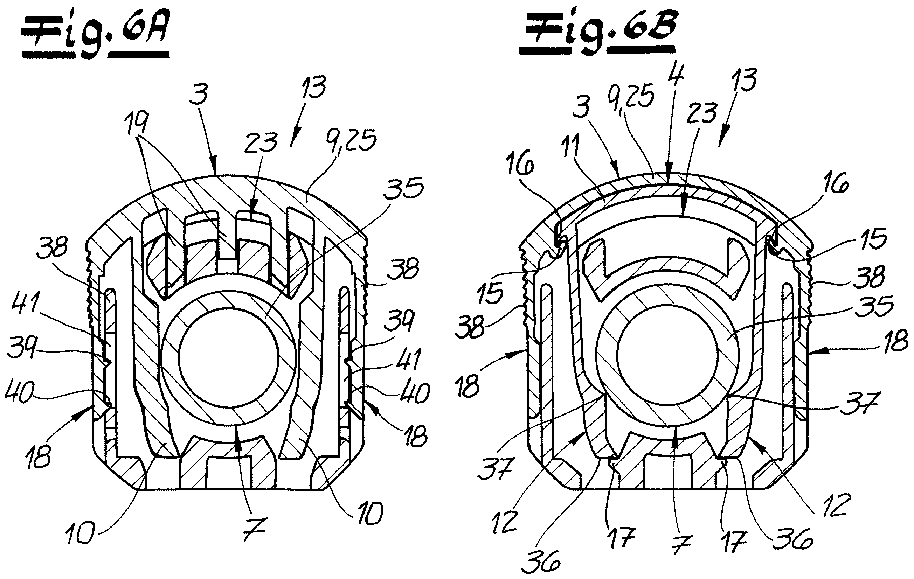

In den Figuren 6a bis 8b ist die Bewegungsabfolge des Rückhalters 3 und des Indikators 4 während des Einführvorgangs des Gegenstücks 7 gezeigt. Dabei ist in den Fig. 6a, 7a und 8a jeweils ein Querschnitt durch die Rückhalterbeine 10 dargestellt, während die Fig. 6b, 7b und 8b den entsprechenden Querschnitt durch die Indikatorschenkel 12 abbilden. In Fig. 6a befindet sich das Multifunktionsteil 13 in der Vormontagestellung, wobei der Steckerschaft 35 bereits die Rückhalterbeine 10 erreicht hat. Allerdings besitzt der Steckerschaft 35 einen Außendurchmesser, welcher die Rückhalterbeine 10 nicht zu einer Aufspreizung veranlasst, so dass die Rückhalterbeine 10 in Fig. 6a sich in einem entspannten Zustand befinden. Die drei Streben des Halteriegels 19 befinden sich in diesem Ausführungsbeispiel in ihnen jeweils zugeordneten Nuten innerhalb des Kopfabschnittes 5 bzw. des Kopfteils 23. Sowohl die oberen Rastelemente 39 als auch die unteren Rastelemente 40 der Sicherungsarme 18 stehen in Eingriff mit einem oberen Rastmittel 41 in Form eines Fensters einer Seitenwand des Kopfabschnittes 5 bzw. des Kopfteils 23. Die oberen Rastelemente 39 definieren mit einem oberen Rand der oberen Rastmittel 41 in Form der Fenster ein kleines Spiel. Vor allem aber sichern die oberen Rastelemente 39 der Sicherungsarme 18 per Eingriff mit den oberen Rastmitteln 41 das Multifunktionsteil 13 in dem Kupplungskörper 2 bzw. in dem Kopfabschnitt 6 bzw. in dem Kopfteil 23. Das Multifunktionsteil 13 kann nur aus dem Kupplungskörper 2 gelöst werden, wenn beide Sicherungsarme 18 manuell auseinandergespreizt werden, bis die oberen Rastelemente 39 nicht mehr in Eingriff stehen mit den oberen Rastmitteln 41.

Der Querschnitt durch die Indikatorschenkel 12 in Fig. 6b zeigt einen Zustand, in welchem der Steckerschaft 35 des Gegenstücks 7 auch die Indikatorschenkel 12 bereits erreicht hat. Auch die Indikatorschenkel 12 sind so ausgestaltet, dass der Außendurchmesser des Steckerschaftes 35 die Indikatorschenkel 12 nicht aufspreizt. Folglich befinden sich die Indikatorschenkel 12 ebenfalls noch in einem entspannten Zustand, so dass insbesondere die Indikatorschenkelvorsprünge 37 entweder nur leicht auf dem Steckerschaft 35 aufliegen oder aber einen geringen Abstand zu diesem aufweisen. Die Indikatorschenkelenden 36 stoßen in radialer Richtung nach unten an Indikatoranschlägen 17 an, so dass das Multifunktionsteil 13 nicht mittels manuellem Druck von oben in die Montagestellung überführt werden kann. Folglich befindet sich das Multifunktionsteil 13 in der Vormontagestellung in einem blockierten Zustand, was für den Benutzer, beispielsweise einen Kfz-Mechaniker, haptisch sehr leicht erkennbar ist.

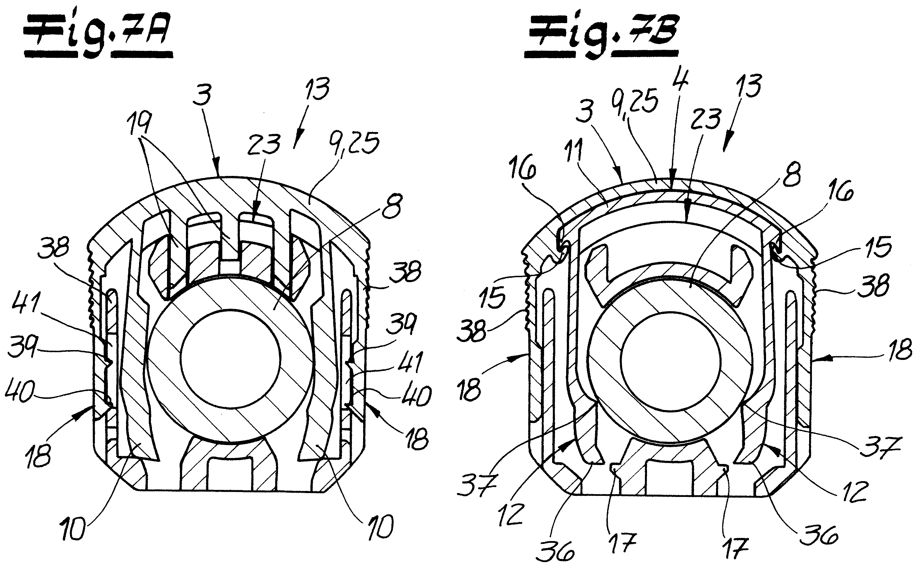

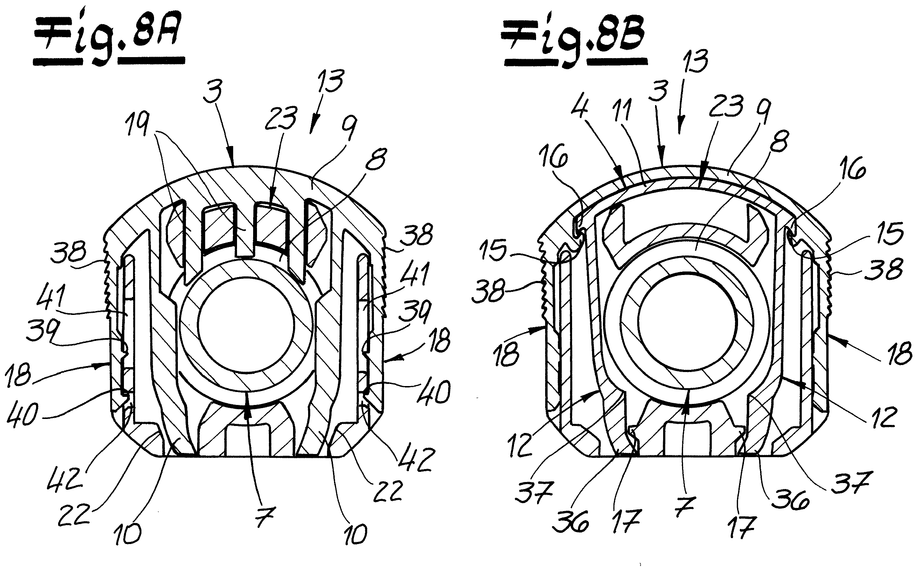

Mit Blick auf Fig. 7a ist erkennbar, dass das Gegenstück 7 nun so weit eingeführt wurde, dass dessen umlaufender Bund 8 die Rückhalterbeine 10 auseinanderspreizt, wofür der Kopfabschnitt 5 bzw. Sicherungsarme 18 ausreichend Raum bietet bzw. bieten. In Figur 7b wurde das Gegenstück 7 noch etwas weiter in den Kupplungskörper 2 eingeschoben, so dass nun die Indikatorschenkel 12 ebenfalls auseinandergespreizt werden. Während die Indikatorschenkel 12 mit ihren Indikatorschenkelvorsprüngen 37 auf dem Außenumfang des umlaufenden Bundes 8 anliegen, sind die Rückhalterbeine 10 aufgrund des weiteren Vordringens des umlaufenden Bundes 8 wieder in die entspannte Position zurückgekehrt (nicht dargestellt). Folglich befindet sich das Gegenstück 7 in der in Figur 7b gezeigten Situation hinsichtlich des Rückhalters 3 bzw. dessen Rückhalterbeine 10 bereits in einem verrasteten bzw. gesicherten Zustand. Gleichzeitig sind die Indikatorschenkelenden 36 so weit ausgelenkt worden, dass sie nicht mehr an den Indikatoranschlägen 17 anschlagen. Folglich kann der Benutzer nun mittels manuellem Druck von oben auf den Rücken 25 das Multifunktionsteil 13 in die Montagestellung überführen, wie dies in den Figuren 8a und 8b gezeigt ist.

Ausweislich von Fig. 8a ist das Multifunktionsteil 13 vollständig eingeschoben, so dass untere Enden der Rückhalterbeine 10 mit einem unteren Rand des Kopfabschnittes 5 fluchten. Die Rückhalterbeine 10 können - mit Ausnahme eines geringen radialen Spiels - aufgrund von Rückhalteranschlägen 22 des Kopfabschnittes 5 nicht mehr auseinandergespreizt werden. Folglich kann auch eine große Zugbelastung auf die Schnellverbindung umfassend den Schnellverbinder 1 und das Gegenstück 7 nicht dazu führen, dass das Gegenstück 7 aus dem Schnellverbinder 1 herausgerissen wird. Hierbei werden die Rückhalterbeine 10 noch durch den Halteriegel 19 unterstützt, dessen Streben einen oberen Bereich des umlaufenden Bundes 8 zusätzlich sichern. Außerdem ist das Multifunktionsteil 13 in dem Kopfabschnitt 5 gesichert, weil die unteren Rastelemente 40 der Sicherungsarme 18 mit unteren Rastmitteln 42 in Form von Fenstern des Kopfabschnittes 5 in einem verrasteten Eingriff stehen. Auch hier kann das Multifunktionsteil 13 nur dadurch von dem Kopfabschnitt 5 bzw. von dem Kupplungskörper 2 gelöst werden, indem die Sicherungsarme 18 manuell auseinandergespreizt werden und das Multifunktionsteil 13 zugleich nach oben abgezogen wird. In Fig. 8b ist dann der zugehörige Querschnitt durch die Indikatorschenkel 12 abgebildet. Weil die weit nach innen ragenden Indikatorschenkelvorsprünge 37 weiter nach unten geschoben wurden, haben diese nun erneut eine entspannte Position unterhalb des umlaufenden Bundes 8 angenommen.

In der in den Figuren 8a und 8b gezeigten Situation ist das Gegenstück 7 vollständig eingeführt, während gleichzeitig das Multifunktionsteil 13 vollständig eingeschoben ist. Das vollständige Einschieben erkennt der Benutzer daran, dass nun der Rücken bündig in dem Kopfabschnitt 5 mit Hilfe der Aussparung 20 versenkt ist. Weil die Montagestellung bzw. die bündige Versenkung nur dann erreichbar ist, wenn das Gegenstück 7 seinerseits vollständig eingeführt ist (vgl. Fig. 7b), ist an der bündigen Versenkung nicht nur zu erkennen, dass die Montagestellung des Multifunktionsteils 13, sondern insbesondere auch die vollständige Einführung des Gegenstücks 7 vorgenommen wurde. Der Indikator 4 dient damit der Überprüfung der vollständigen Einführung des Gegenstücks 7.

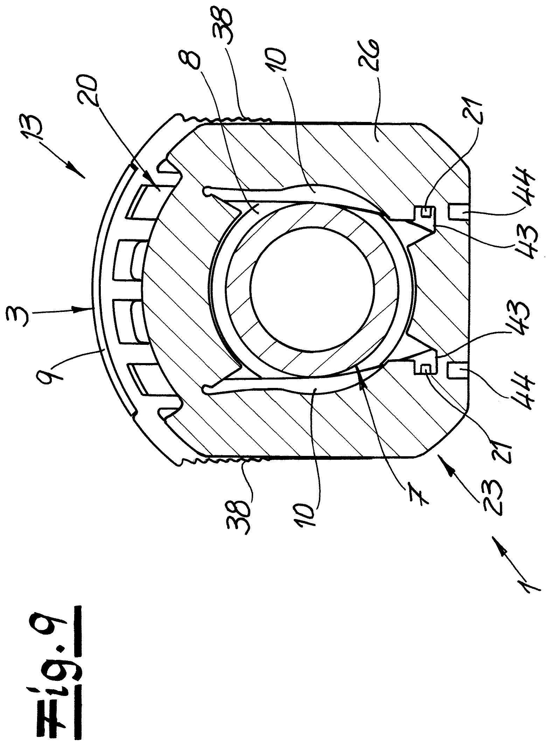

In Fig. 9 ist ein Querschnitt durch die Vorderwand 26 abgebildet und im Übrigen die zu Fig. 7b beschriebene Situation dargestellt. Folglich befindet sich der umlaufende Bund 8 im Falle von Fig. 9 in der Einführrichtung bereits hinter den Rückhalterbeinen 10 und ist damit durch den Rückhalter 3 gesichert, während die Indikatorschenkel 12 auseinandergespreizt sind (in dieser Figur verdeckt). Die hier dargestellte Situation zeigt somit die Vormontagestellung der Schnellverbindung unmittelbar bevor der Druck von oben erfolgt, um die Schnellverbindung in die Montagestellung zu überführen. In dieser Situation können die Rückhalterbeine 10 noch auseinandergespreizt werden, weil sie noch nicht an die Rückhalteranschläge 22 anschlagen. Somit kann über eine große Zugbelastung der Schnellverbindung das Gegenstück 7 wieder aus dem Schnellverbinder 1 herausgerissen werden.

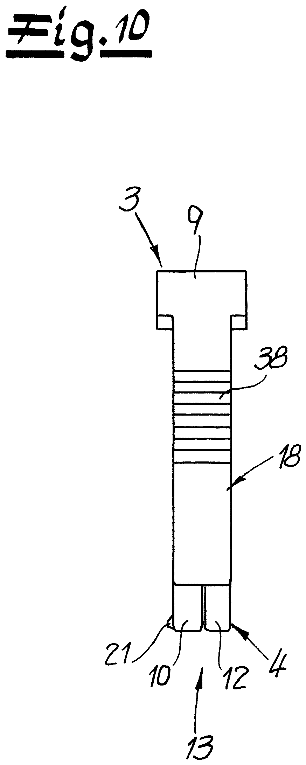

Um dies zu vermeiden, sind an den Enden der Rückhalterbeine 10 Ausbuchtungen 21 angeordnet (siehe Fig. 9 und 10), welche sich in axialer Richtung erstrecken und der Innenseite der Vorderwand 26 zugewandt sind. Ebenso weist die Vorderwand 26 zwei Einbuchtungen 43 auf, welche in diesem Ausführungsbeispiel als Wanddurchbrüche ausgebildet sind und die Ausbuchtungen 21 aufnehmen. Die axiale Ausdehnung der Ausbuchtungen 21 ist relativ gering, wie dies insbesondere aus Fig. 10 hervorgeht. Tritt nun eine große Zugbelastung auf die Schnellverbindung auf, so werden die Rückhalterbeine 10 an die Innenseite der Vorderwand 26 gepresst, während gleichzeitig die Ausbuchtungen 21 nach radial außen streben, aber von den radial äußeren Seitenwänden der Einbuchtungen 43 daran gehindert werden. Folglich sind die Ausbuchtungen 21 und die Einbuchtungen 43 Bestandteile einer Zugsicherung für die Vormontagestellung.

Ferner weist die Vorderwand 26 gemäß Fig. 9 auf ihrer Innenseite zwei Ausnehmungen 44 auf, welche allerdings nicht die Wand durchbrechen, sondern etwa dieselbe axiale Ausdehnung wie die Ausbuchtungen 21 aufweisen. Wenn die Schnellverbindung in der Montagestellung auf starken Zug belastet wird, dann liegen die Rückhalterbeine 10 mit ihren Vorderseiten verhältnismäßig flächig an der Innenseite der Vorderwand 26 an, weil die Ausnehmungen 44 die Ausbuchtungen 21 vollständig aufnehmen.

**Bezugszeichen**

| | | | |
|---|---|---|---|
| 1 | Schnellverbinder | 24 | Dichtungsteil |
| 2 | Kupplungskörper | 25 | Rücken |
| 3 | Rückhalter | 26 | Vorderwand |
| 4 | Indikator | 27 | Rückwand |
| 5 | Kopfabschnitt | 28 | Dichtung |
| 6 | Steckabschnitt | 29 | Rastelement |
| 7 | Gegenstück | 30 | Rastelement |
| 8 | umlaufender Bund | 31 | starres Element |
| 9 | Rückhalterbeine | 32 | Rastabschnitt |
| 10 | Rückhalterbeine | 33 | Rastabschnitt |
| 11 | Indikatorkopf | 34 | Dichtungsabschnitt |
| 12 | Indikatorschenkel | 35 | Steckerschaft |
| 13 | Multifunktionsteil | 36 | Indikatorschenkelende |
| 14 | erstes Rohr | 37 | Indikatorschenkelvorsprung |
| 15 | Vorsprung | 38 | Griffelement |
| 16 | Nase | 39 | oberes Rastelement |
| 17 | Indikatoranschläge | 40 | unteres Rastelement |
| 18 | Sicherungsarme | 41 | oberes Rastmittel |
| 19 | Halteriegel | 42 | unteres Rastmittel |
| 20 | Aussparung | 43 | Einbuchtungen |
| 21 | Ausbuchtung | 44 | Ausnehmungen |
| 22 | Rückhalteranschläge | 45 | Rohranschlag |
| 23 | Kopfteil | | |

## Patentansprüche

1. Schnellverbinder (1), umfassend einen Kupplungskörper (2) und ein Multifunktionsteil (13), wobei das Multifunktionsteil (13) einen Rückhalter (3) und einen Indikator (4) aufweist, wobei der Kupplungskörper (2) an einem Ende einen Kopfabschnitt (5) und am anderen Ende einen Steckabschnitt (6) umfasst, wobei der Steckabschnitt (6) zum Auf- oder Einstecken eines ersten Rohrs (14) ausgebildet ist, wobei der Kopfabschnitt (5) eine axiale Öffnung zur Einführung eines Gegenstücks (7) mit umlaufendem Bund (8) aufweist, wobei der Kopfabschnitt (5) wenigstens eine radiale Öffnung zum Einschieben des Multifunktionsteils (13) umfasst,
wobei das Multifunktionsteil (13) einen Rücken (25) zur manuellen Betätigung zwecks Einschiebens in den Kupplungskörper (2) aufweist, wobei der Rückhalter (3) zwei Rückhalterbeine (10) umfasst, wobei der Indikator (4) zwei Indikatorschenkel (12) aufweist, wobei die Indikatorschenkel (12) bei Einführung des umlaufenden Bundes (8) unabhängig von den Rückhalterbeinen (10) bewegbar sind, wobei die Indikatorschenkel (12) und der Kupplungskörper (2) so ausgebildet sind, dass der Indikator (4) aufgrund der durch den umlaufenden Bund (8) verursachten Bewegung der Indikatorschenkel (12) von einer teilweise eingeschobenen Vormontagestellung in eine vollständig eingeschobene Montagestellung überführbar ist, wobei das Multifunktionsteil (13) zwei Sicherungsarme (18) zur Sicherung des Multifunktionsteils (13) in dem Kupplungskörper (2) aufweist,
**dadurch gekennzeichnet, dass**
die Rückhalterbeine (10) so ausgebildet sind, dass sie auseinander gespreizt werden, wenn der Rückhalter (3) sich innerhalb des Kupplungskörpers (2) befindet und der umlaufende Bund (8) des Gegenstücks (7) in der Einführrichtung des Gegenstücks (7) die Rückhalterbeine (10) berührt.

2. Schnellverbinder (1) nach Anspruch 1, wobei der Rückhalter (3) eine Rückhalterbasis (9) aufweist und/oder der Indikator (4) einen Indikatorkopf (11) umfasst.

3. Schnellverbinder (1) nach einem der Ansprüche 1 oder 2, wobei der Indikator (4) an dem Rückhalter (3) kraft- und/oder form- und/oder stoffschlüssig befestigt und vorzugsweise festgeklemmt ist.

4. Schnellverbinder (1) nach einem der Ansprüche 1 bis 3, wobei der Rückhalter (3) und der Indikator (4) miteinander verrastet bzw. miteinander verrastbar sind.

5. Schnellverbinder (1) nach einem der Ansprüche 1 bis 4, wobei ein Lösen des Indikators (4) vom Rückhalter (3) in rein radialer und/oder in rein axialer Richtung unterbunden wird.

6. Schnellverbinder (1) nach einem der Ansprüche 1 bis 5, wobei der Indikator (4) wenigstens eine Nase (16) umfasst, welche nach radial außen hervorragt.

7. Schnellverbinder (1) nach einem der Ansprüche 1 bis 6, wobei die Indikatorschenkel (12) in der Einführrichtung des Gegenstücks (7) hinter den Rückhalterbeinen (10) angeordnet sind.

8. Schnellverbinder (1) nach einem der Ansprüche 1 bis 7, wobei der Kupplungskörper (2) zwei Indikatoranschläge (17) aufweist, wobei jeder der beiden Indikatoranschläge (17) einem der beiden Indikatorschenkel (12) zugeordnet ist, wobei die Indikatoranschläge (17) die Vormontagestellung definieren.

9. Schnellverbinder (1) nach einem der Ansprüche 1 bis 8, wobei das Multifunktionsteil (13) wenigstens einen Halteriegel (19) aufweist.

10. Schnellverbinder (1) nach einem der Ansprüche 1 bis 9, wobei der Kopfabschnitt (5) des Kupplungskörpers (2) eine Aussparung (20) aufweist, so dass das Multifunktionsteil (13) bzw. der Rückhalter (3) bzw. die Rückhalterbasis (9) bündig in den Kopfabschnitt (5) einschiebbar ist.

11. Schnellverbinder (1) nach einem der Ansprüche 1 bis 10, wobei die Rückhalterbeine (10) jeweils eine sich in axialer Richtung erstreckende Ausbuchtung (21) aufweisen, wobei die jeweilige Ausbuchtung (21) vorzugsweise auf einer dem Indikator (4) abgewandten Seite der Rückhalterbeine (10) befindlich ist.

12. Schnellverbinder (1) nach einem der Ansprüche 1 bis 11, wobei der Kupplungskörper (2) zwei Rückhalteranschläge (22) aufweist, wobei die Rückhalteranschläge (22) so ausgebildet sind, dass ein Aufspreizen der Rückhalterbeine (10) unterbunden wird, wenn sich der Rückhalter (3) in der Montagestellung befindet.

13. Schnellverbinder (1) nach einem der Ansprüche 1 bis 12, wobei der Kupplungskörper (2) ein Kopfteil (23) und ein Dichtungsteil (24) umfasst, wobei das Kopfteil (23) und das Dichtungsteil (24) zueinander separat ausgebildet sind.

14. Schnellverbindung, umfassend einen Schnellverbinder (1) nach einem der Ansprüche 1 bis 13 sowie ein Gegenstück (7) mit einem umlaufenden Bund (8).

## Claims

1. A quick connector (1), comprising a coupling body (2) and a multifunctional part (13), wherein the multifunctional part (13) has a retainer (3) and an indicator (4), wherein the coupling body (2) comprises a head section (5) at one end and a plug section (6) at the other end, wherein the plug section (6) is designed for plugging on or plugging in a first tube (14), wherein the head section (5) has an axial opening for introducing a counter-piece (7) with a circumferential collar (8), wherein the head section (5) comprises at least one radial opening for inserting the multifunctional part (13),
wherein the multifunctional part (13) has a back (25) for manual activation for purposes of insertion into the coupling body (2), wherein the retainer (3) comprises two retainer legs (10), wherein the indicator (4) has two indicator legs (12), wherein the indicator legs (12) can be moved independently of the retainer legs (10) during insertion of the circumferential collar (8), wherein the indicator legs (12) and the coupling body (2) are designed in such a way that the indicator (4) can be transferred from a partially inserted preassembly position into a completely inserted assembly position by the movement of the indicator legs (12) caused by the circumferential collar (8), wherein the multifunctional part (13) has two safety arms (18) for securing the multifunctional part (13) in the coupling body (2),
**characterized in that**
the retainer legs (10) are designed in such a way as to be spread apart when the retainer (3) is located inside of the coupling body (2) and the circumferential collar (8) of the counter-piece (7) contacts the retainer legs (10) in the direction of introduction of the counter piece (7).

2. The quick connector (1) according to claim 1, wherein the retainer (3) has a retainer base (9) and/or the indicator (4) comprises an indicator head (11).

3. The quick connector (1) according to one of claims 1 or 2, wherein the indicator (4) is fastened in a force-fit, form-fit and/or material-fit manner, and preferably clamped tightly, to the retainer (3).

4. The quick connector (1) according to one of claims 1 to 3, wherein the retainer (3) and the indicator (4) are latched or can be latched with each other.

5. The quick connector (1) according to one of claims 1 to 4, wherein the indicator (4) is prevented from detaching from the retainer (3) in a purely radial and/or in a purely axial direction.

6. The quick connector (1) according to one of claims 1 to 5, wherein the indicator (4) comprises at least one nose (16), which protrudes radially outward.

7. The quick connector (1) according to one of claims 1 to 6, wherein the indicator legs (12) are arranged behind the retainer legs (10) in the direction of introduction of the counter-piece (7).

8. The quick connector (1) according to one of claims 1 to 7, wherein the coupling body (2) has two indicator stops (17), wherein each of the two indicator stops (17) has allocated to it one of the two indicator legs (12), wherein the indicator stops (17) define the preassembly position.

9. The quick connector (1) according to one of claims 1 to 8, wherein the multifunctional part (13) has at least one retaining bolt (19).

10. The quick connector (1) according to one of claims 1 to 9, wherein the head section (5) of the coupling body (2) has a recess (20), so that the multifunctional part (13) or the retainer (3) or the retainer base (9) can be inserted flush into the head section (5).

11. The quick connector (1) according to one of claims 1 to 10, wherein the retainer legs (10) each have a bulge (21) extending in the axial direction, wherein the respective bulge (21) is preferably located on a side of the retainer legs (10) facing away from the indicator (4) .

12. The quick connector (1) according to one of claims 1 to 11, wherein the coupling body (2) has two retainer stops (22), wherein the retainer stops (22) are designed in such a way as to prevent the retainer legs (10) from spreading apart when the retainer (3) is located in the assembly position.

13. The quick connector (1) according to one of claims 1 to 12, wherein the coupling body (2) comprises a head part (23) and a sealing part (24), wherein the head part (23) and the sealing part (24) are designed separately from each other.

14. A quick connector, comprising a quick connector (1) according to one of claims 1 to 13, as well as a counter-piece (7) with a circumferential collar (8).

## Revendications

1. Raccord rapide (1) comprenant un corps d'accouplement (2) et une pièce multifonctionnelle (13), sachant que la pièce multifonctionnelle (13) comporte un élément de retenue (3) et un indicateur (4), sachant que le corps d'accouplement (2) comprend à une extrémité une section de tête (5) et à l'autre extrémité une section enfichable (6), sachant que la section enfichable (6) est constituée pour l'emboîtement ou l'enfichage d'un premier tube (14), sachant que la section de tête (5) comporte une ouverture axiale pour introduire une pièce complémentaire (7) avec un collet périphérique (8), sachant que la section de tête (5) comprend au moins une ouverture radiale pour insérer la pièce multifonctionnelle (13),
sachant que la pièce multifonctionnelle (13) comporte une pièce dorsale (25) pour la manutention manuelle dans le but d'insertion dans le corps d'accouplement (2), sachant que l'élément de retenue (3) comprend deux montants de retenue (10), sachant que l'indicateur (4) comporte deux branches d'indicateur (12), sachant que les branches d'indicateur (12) peuvent être déplacées indépendamment des montants de retenue (10) lors de l'introduction du collet périphérique (8), sachant que les branches d'indicateur (12) et le corps d'accouplement (2) sont constitués de telle manière que l'indicateur (4) peut être transféré d'une position de prémontage piècellement insérée dans une position de montage complètement insérée en raison du mouvement causé par le collet périphérique (8) des branches d'indicateur (12), sachant que la pièce multifonctionnelle (13) comporte deux bras de sécurisation (18) pour la sécurisation de la pièce multifonctionnelle (13) dans le corps d'accouplement (2),
**caractérisé en ce que**
les montants de retenue (10) sont constitués de telle manière qu'ils sont écartés l'un de l'autre lorsque l'élément de retenue (3) se trouve à l'intérieur du corps d'accouplement (2) et le collet périphérique (8) de la pièce complémentaire (7) est en contact avec les montants de retenue (10) dans la direction d'introduction de la pièce complémentaire (7).

2. Raccord rapide (1) selon la revendication 1, sachant que l'élément de retenue (3) comporte une base d'élément de retenue (9) et/ou l'indicateur (4) comprend une tête d'indicateur (11).

3. Raccord rapide (1) selon l'une quelconque des revendications 1 ou 2, sachant que l'indicateur (4) est fixé et est de préférence bloqué à l'élément de retenue (3) par conformité de force et/ou de forme et/ou par conformité de matière.

4. Raccord rapide (1) selon l'une quelconque des revendications 1 à 3, sachant que l'élément de retenue (3) et l'indicateur (4) sont enclenchés l'un dans l'autre ou peuvent être enclenchés l'un dans l'autre.

5. Raccord rapide (1) selon l'une quelconque des revendications 1 à 4, sachant qu'un détachement de l'indicateur (4) de l'élément de retenue (3) est empêché en direction purement radiale et/ou purement axiale.

6. Raccord rapide (1) selon l'une quelconque des revendications 1 à 5, sachant que l'indicateur (4) comprend au moins un ergot (16), lequel dépasse radialement vers l'extérieur.

7. Raccord rapide (1) selon l'une quelconque des revendications 1 à 6, sachant que les branches d'indicateur (12) sont disposées dans la direction d'introduction de la pièce complémentaire (7) derrière les montants de retenue (10).

8. Raccord rapide (1) selon l'une quelconque des revendications 1 à 7, sachant que le corps d'accouplement (2) comporte deux butées d'indicateur (17), sachant que chacune des deux butées d'indicateur (17) est attribuée à une des deux branches d'indicateur (12), sachant que les butées d'indicateur (17) définissent la position de prémontage.

9. Raccord rapide (1) selon l'une quelconque des revendications 1 à 8, sachant que la pièce multifonctionnelle (13) comporte au moins une languette de retenue (19).

10. Raccord rapide (1) selon l'une quelconque des revendications 1 à 9, sachant que la section de tête (5) du corps d'accouplement (2) comporte un évidement (20) de telle sorte que la pièce multifonctionnelle (13) ou l'élément de retenue (3) ou la base de retenue (9) peuvent être insérées en affleurement dans la section de tête (5).

11. Raccord rapide (1) selon l'une quelconque des revendications 1 à 10, sachant que les montants de retenue (10) comportent respectivement un renflement (21) s'étendant en direction axiale, sachant que le renflement respectif (21) se trouve de préférence sur un côté des montants de retenue (10) éloigné de l'indicateur (4).

12. Raccord rapide (1) selon l'une quelconque des revendications 1 à 11, sachant que le corps d'accouplement (2) comporte deux butées de retenue (22), sachant que les butées de retenue (22) sont constituées de telle manière qu'un écartement des montants de retenue (10) est empêché lorsque l'élément de retenue (3) se trouve dans la position de montage.

13. Raccord rapide (1) selon l'une quelconque des revendications 1 à 12, sachant que le corps d'accouplement (2) comprend une pièce de tête (23) et une pièce d'étanchéité (24), sachant que la pièce de tête (23) et la pièce d'étanchéité (24) sont constituées séparément l'une par rapport à l'autre.

14. Raccordement rapide comprenant un raccord rapide (1) selon l'une quelconque des revendications 1 à 13 ainsi qu'une pièce complémentaire (7) avec un collet périphérique (8).
